Europäisches Patentamt

European Patent Office

Office européen des brevets

(19)

(11) Publication number: **0 408 298 A2**

# (12) EUROPEAN PATENT APPLICATION

(21) Application number: **90307510.9**

(22) Date of filing: **10.07.90**

(51) Int. Cl.⁵: **G11B 5/48**

(30) Priority: **10.07.89 US 378583**

(43) Date of publication of application:
**16.01.91 Bulletin 91/03**

(84) Designated Contracting States:
**AT BE CH DE DK ES FR GB GR IT Li NL SE**

(71) Applicant: **Compaq Computer Corporation**
**20555 S.H. 249**
**Houston Texas 77070(US)**

(72) Inventor: **Tolbert, Cloys G.**
**1006 N. White Oak Road**
**White Oak, Texas 75693(US)**

(74) Representative: **Brunner, Michael John et al**
**GILL JENNINGS & EVERY 53-64 Chancery**
**Laneane**
**London WC2A 1HN(GB)**

(54) **Head gimbal flexure assembly.**

(57) A unified assembly (H) for a hard disk drive is disclosed which allows the disk drive unit to be packaged in a smaller volume. The head assemblies (11,12) between platters (15,16) are mounted side-by-side and are combined into a single unit sharing a common base (17). This reduces the distance between platters (15,16), thereby conserving space.

FIG.3

## HEAD GIMBAL FLEXURE ASSEMBLY

The present invention relates to a head assembly used in a hard disk drive.

The personal computer industry is a vibrant and growing field. Personal computer systems have developed over the years and new uses are being discovered daily.

A standard feature in the personal computer industry has-been the concurrent demand for increasing amounts of data storage capability combined with the need for a minimization of the overall size of the computer. Mass storage devices are a main feature of personal computers that have been affected by these demands placed on them.

There are two main types of random access mass storage devices, floppy disk units and hard disk units. Each of these employs a magnetic recording technology wherein magnetic field changes in a layer of magnetic material are used to store information. Floppy disk units employ a flexible media on which they record information and there is generally contact between the head assembly and the disk, thereby generally limiting the maximum storage capacity. Currently, units having 360 kbytes to 1.44 Mbytes are readily available.

Hard disks derive their name from the fact that the magnetically coated disks used consist of rigid platters made of an aluminum alloy. Hard disks are different from floppies in that the platter and head assembly are not in contact during operation. Hard disks are also generally not removable like a floppy, but rather are sealed inside the disk drive, protecting the platters against dust and other contamination. Due to these and other factors, the hard disk utilizes a much faster speed of rotation and a higher recording density. Therefore, the hard disk is capable of storing much greater amounts of information, its capacity commonly ranging up to hundreds of Megabytes.

The personal computer market has continually demanded increasing amounts of data storage capability (memory) in as small a volume as possible. For a hard disk, larger memory capacity can be achieved in several ways. One method is to increase the diameter of the platters, but this is generally undesirable due to the resultant increase in size. Recording densities on the platter can be increased, but this often results in an unacceptable cost increase.

A third method that has proven successful is the use of several platters mounted coaxially. This use of several platters increases the storage capacity without increasing the recording density or the diameters of the platters. However, overall volume for the disk drive is increased using this method due to the spacing required between platters for the disk drive head assembly, so there are limitations to simply increasing the number of platters.

Head assemblies are used in hard disk units to mount the head which produces or senses the magnetic fields used in writing or reading information. The head assemblies are mounted to an arm and driven by a motor to allow positioning of the head. There are two types of arms, a radial arm that is hinged at one end and is similar to the tone arm in a conventional phonograph, and a linear arm that moves directly across the diameter of the platter and operates similarly to the tone arm in a linear-tracking phonograph.

Regardless of the type of arm used, the head assemblies located between two platters in a hard disk unit have generally consisted of two distinct assemblies that oppose or are vertically aligned with each other, with each of these assemblies operating on separate platters. The configuration of two separate assemblies opposing each other requires that there be a certain distance between platters to accommodate the space that these head assemblies use, thereby limiting the amount of height reduction possible, thus limiting the number of platters that can be installed in a given height and the overall capacity of the hard disk unit.

The present invention uses a unified head assembly between two platters in a hard disk unit which combines what were formerly two separate head assemblies into one. The two head assemblies between platters are combined into a single unit and are mounted in a side-by-side arrangement sharing a common base, this being mounted to the arm of the disk drive. This common mounting configuration reduces the distance necessary between platters in the hard disk unit, allowing the platters to be mounted closer together. Thus, more platters can be located in a given volume, thereby increasing hard disk unit capacity, or, alternatively, a reduction in the height of the hard disk unit is accomplished while retaining the same storage capacity.

A better understanding of the invention can be had when the following detailed description of the preferred embodiment is considered in conjunction with the following drawings, in which:

Fig. 1 is a side view of a unified head assembly mounted between two platters;

Fig. 2 is a top view of the unified head assembly of Fig. 1; and

Fig. 3 is a perspective view of the unified head assembly of Fig. 1.

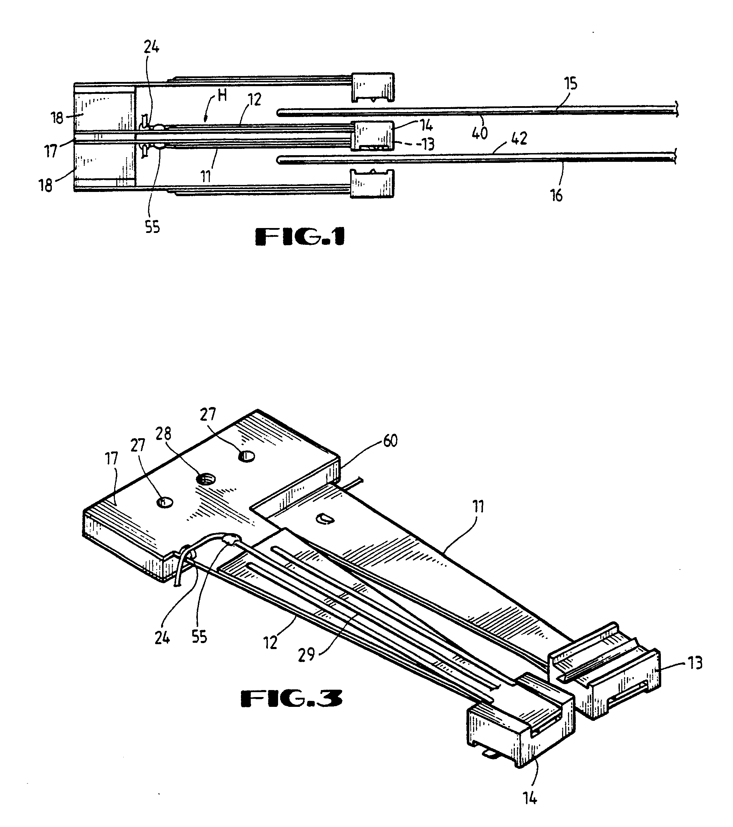

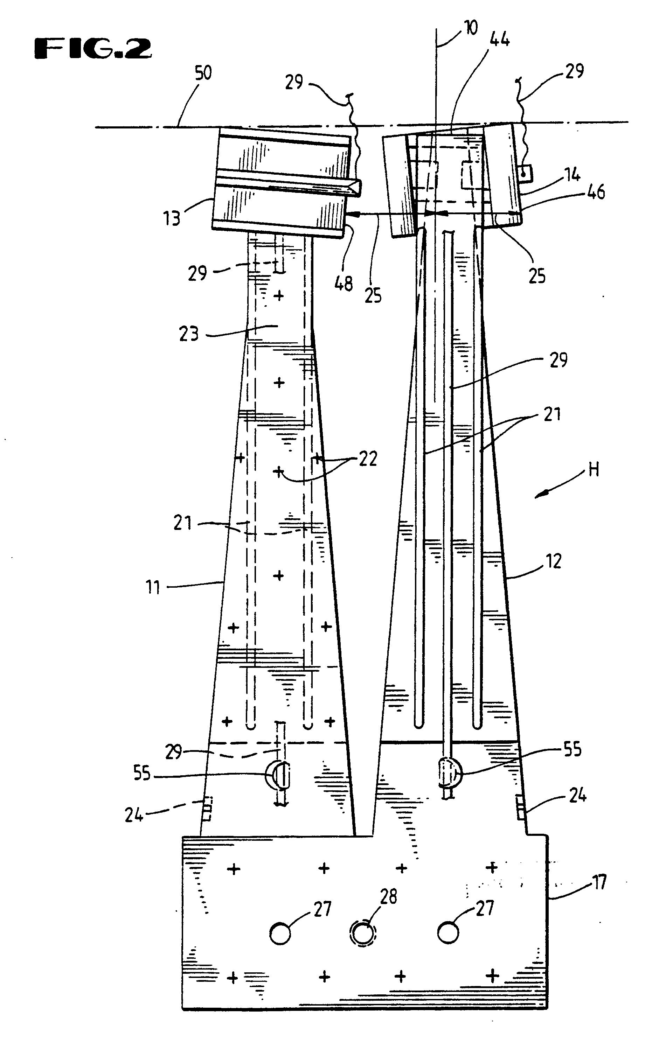

Referring now to Figure 1, the letter H generally refers to a unified head assembly according to the present invention. The assembly H includes an upper assembly piece 11 which is oriented facing the lower surface 40 of an upper platter 15 of a disk drive, and a lower assembly piece 12, which is oriented facing the upper surface 42 of a lower platter 16. These assembly pieces 11 and 12 share a common base 17 from which they both originate. The assembly pieces 11 and 12 are mounted in a side-by-side arrangement and biased in opposite directions so that the upper assembly piece 11 is biased upwardly, while the lower assembly piece 12 is biased downwardly. This biasing is accomplished by preforming or bending the assembly pieces 11 and 12 in such a way as to achieve the desired orientation. The thickness of each assembly piece 11 and 12 is approximately .003" with approximately a .020" spacer 60 (Fig. 3) between each assembly piece 11 and 12 in the base 17.

Heads 13 and 14 are located at one end of each assembly piece 11 and 12 with the upper head 13 for use on the upper platter 15 and the lower head 14 for use on the lower platter 16. When the head assembly H is operating on the hard disk unit, i.e. when the heads 13 and 14 are in contact with their respective platters 15 and 16, the assembly pieces are preferably approximately horizontal to the plane of the platters. The bias force of the assemblies 11 and 12 is such that the heads 13 and 14 are positioned an appropriate gap from the platters 15 and 16 when the platters are rotating. The heads 13 and 14 shown are conventional MnZn monolithic heads, but composite MnZn heads or other suitable head materials and designs can be used. The unified head assembly H is mounted to an arm 18 of the disk drive to allow movement. In the embodiment shown, the arm 18 is intended to move linearly along a radius or center line 10 of the platters, but variations of the unified head assembly H can be used on radial motion arms.

Referring now to Figure 2, each of the assembly pieces 11 and 12 is preferably approximately 1.25" in length from the base 17 to the tip of the head 13 and 14, with the base 17 being preferably approximately 0.5" by 0.236". Near the head end 44 of each assembly piece is the head stake flexure 23. The heads 13 and 14 of each of the assembly pieces 11 and 12 are attached to their respective head stake flexures 23 and are facing opposite directions, toward their respective platters 15 and 16. The heads 13 and 14 are situated generally side-by-side, with each head 13 and 14 preferably being oriented 5° (shown exaggerated) from a line 50 normal to the center line 10 to increase head magnetic flux output by better approximating cylinder curvature. The centerline 10 of the platters 15 and 16 preferably runs through the lower assembly piece 12 and through the lower head 14 so that there exists equal gaps 25 of approximately 0.10" between the leading edge 46 of the lower head 14 and the leading edge 48 of the upper head 13 and the center line 10.

On the back of each assembly piece 11 and 12, the side away from that piece's respective platter 15 and 16, a wire guide 21 is utilized as a stiffener and wire guide. The wire guide 21 runs lengthwise along the back of each assembly piece 11 and 12 from the respective head 13 and 14 to the base 17. Spot welds 22, indicated by the plus symbol, are used throughout to fasten the various elements together, with, for example, approximately eight spot welds 22 used in the base 17 and approximately eleven spot welds 22 used in each assembly piece 11 and 12 as shown. A wire 29 runs lengthwise through the wire guide 21 on the back of the respective assembly piece 11 and 12 from its connection on the respective head 13 and 14 down to the base 17. In addition to the wire guide 21, further means are provided for affixing the wire 29 to its respective assembly piece 11 and 12. At the wide part of each of the assembly pieces 11 and 12 and just above the base 17, a cut 55 in the shape of a quarter moon or partial circle is made. The material, preferably a suitable metal alloy, inside the circumference of the circular cut 55 is then raised over the plane of the assembly piece 11 and 12 so that the wire 29 can be slipped under the cutout 55 to hold the wire 29 in place. A tubing clip 24 (Figs. 2 and 3) is used in conjunction with this cutout 55 and includes a metal piece through which the wire 29 is inserted, this for the purposes of added strain relief and for further holding the wire 29 in place. Each tubing clip 24 is elevated perpendicular to its respective assembly piece 11 and 12 and is affixed to the outside edge of its respective assembly piece 11 and 12 just above the base 17.

Referring again to Fig. 2, the assembly pieces 11 and 12 are attached to the base 17 of the unified head assembly H. The base 17 contains two mounting holes 27, each being situated along the longitudinal axis of each assembly piece 11 and 12 and otherwise located in the center of the base 17. These holes 27 are used with appropriate mounting hardware to mount the unified head assembly H to the arm 18. In the center of the base is an optional tapped insert 28 for use by alternate mounting methods.

The unified head assembly H allows the platters of a hard disk unit to be spaced closer together, preferably 0.160" apart in the preferred embodiment, thus allowing more platters, and thus more storage capacity, to be installed in a given volume or a smaller volume used for a given storage capacity.

The foregoing disclosure and description of the invention are illustrative and explanatory thereof, and various changes in the size, shape and materials, as well as in the details of the illustrated construction may be made without departing from the spirit of the invention.

**Claims**

1. A unified head fixture assembly (H), for use in a hard disk drive having a plurality of coaxial platters (15,16) and a head drive arm (18), comprising:
a base (17) for mounting to the head drive arm (18), the base (17) being located in use in a plane between two platters (15,16) of the hard disk drive;
a first head fixture assembly (11) having a head (13) mounted thereon and being mounted to the base (17), the head (13) being biased to co-operate with one (15) of the two platters in use; and,
a second head fixture assembly (12) having a head (14) mounted thereon, the head (14) being biased to co-operate with the other (16) of the two platters in use.

2. An assembly according to claim 1, wherein the unified head fixture assembly (H) is adapted for use with a head drive arm (18) which moves in a linear fashion.

3. An assembly according to claim 1 or claim 2, wherein the first head fixture assembly (11) and the second head fixture assembly (12) are located so that the heads (13,14) are in a side-by-side arrangement.

4. An assembly according to any of claims 1 to 3, wherein each first (11) and second (12) head fixture assembly further comprises:
a wire (29) connected to the head (13,14) and travelling along the head fixture assembly (11,12) to the base (17) and means (24,55,) for affixing the wire (29) to the base (17) to provide strain relief.

5. An assembly according to claim 4, wherein the wire affixing means includes tubing clips (24).

6. An assembly according to any of claims 1 to 5, wherein the first (11) and second (12) head fixture assemblies are biased with equal but opposite angles relative to the plane of the base (17).

7. An assembly according to any of claims 1 to 6, wherein the heads (13,14) are mounted to the first (11) and second (12) head fixture assemblies so that the longitudinal axis of each head (13,14) is slightly skewed from an axis perpendicular to the longtudinal axes of the first (11) and second (12) head fixture assemblies.

**FIG.1**

**FIG.3**

# FIG.2